(19) Europäisches Patentamt
European Patent Office
Office européen des brevets

(11) **EP 4 640 040 A1**

(12) **EUROPÄISCHE PATENTANMELDUNG**

(43) Veröffentlichungstag:
**29.10.2025 Patentblatt 2025/44**

(21) Anmeldenummer: **25168449.4**

(22) Anmeldetag: **04.04.2025**

(51) Internationale Patentklassifikation (IPC):
*A01F 15/08* *(2006.01)*

(52) Gemeinsame Patentklassifikation (CPC):
**A01F 15/08; A01D 67/005; A01D 78/1078;**
A01F 15/07

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH LA MA MD TN**

(30) Priorität: **26.04.2024 DE 102024111812**

(71) Anmelder: **Maschinenfabrik Bernard Krone GmbH & Co. KG**
**48480 Spelle (DE)**

(72) Erfinder:
• **Afting, Andreas**
**48488 Emsbüren (DE)**
• **Helper, Erik**
**48465 Quendorf (DE)**

(54) **GESPANN, UMFASSEND EINEN SCHWADER UND EINE BALLENPRESSE SOWIE VERFAHREN ZUM BETREIBEN DES GESPANNS**

(57) Die Erfindung betrifft ein Gespann (1) mit einem Schwader (10) und einer Ballenpresse (20) als Bearbeitungsgeräten, wobei die Ballenpresse (20) einen Pressen-Rahmen (21) aufweist, ein wenigstens indirekt hiermit verbundenes Pressen-Fahrwerk (24) sowie eine Pressen-Kopplungsvorrichtung (23), und wobei der Schwader (10) einen Schwader-Rahmen (11) aufweist, ein wenigstens indirekt hiermit verbundenes Schwader-Fahrwerk (16) sowie eine bezüglich einer Längsachse (X) hinterseitig am Schwader-Rahmen (11) angeordnete hintere Kopplungsvorrichtung (12) mit einem hinteren Ankopplungspunkt (B), an welchem die Pressen-Kopplungsvorrichtung (23) gelenkig sowie zug- und druckkraftübertragend ankoppelbar ist, wodurch die Ballenpresse (20) anteilig am Schwader-Rahmen (11) abstützbar ist. Um die Fahreigenschaften eines Gespanns mit einem Schwader und einer nachfolgenden Ballenpresse zu verbessern, ist erfindungsgemäß vorgesehen, dass ein Lastverlagerungselement (18) dazu eingerichtet ist, ein zwischen dem Schwader-Rahmen (11) und der Ballenpresse (20) wirkendes Verlagerungs-Drehmoment bezüglich des hinteren Ankopplungspunkts (B) auszuüben, durch welches eine Pressen-Achslast ($F_P$) der Ballenpresse (20) unter Erhöhung einer Schwader-Achslast ($F_S$) des Schwaders (10) reduzierbar ist.

**Fig.3**

EP 4 640 040 A1

**Beschreibung**

Die vorliegende Erfindung betrifft ein Gespann nach dem Oberbegriff von Anspruch 1.

Halmgut wie zum Beispiel Gras wird üblicherweise in mehreren Schritten geerntet und verarbeitet. Zunächst erfolgt ein Mähen des Halmguts mit einer Mähmaschine, wonach das Halmgut entweder einfach liegen gelassen wird oder zum Beispiel zur besseren Trocknung auf dem Feld verteilt und/oder gewendet wird. Zu einem späteren Zeitpunkt, gegebenenfalls wenn das Halmgut getrocknet ist, kann es aufgenommen und zu Erntegutballen verarbeitet werden. Dies erfolgt in zwei Arbeitsschritten. Zunächst wird das auf dem Feld verteilte Erntegut mittels eines Schwaders zu einem Schwad zusammengelegt. Bekannte Schwader, zum Beispiel Kreiselschwader, werden typischerweise von einem Schlepper gezogen, der auch die Antriebsleistung für die Bearbeitungsorgane des Schwaders bereitstellt, beispielsweise über eine Zapfwelle. Das Aufnehmen und Verpressen des Halmguts wird mittels einer Ballenpresse, zum Beispiel einer Rundballenpresse, durchgeführt. Derartige Ballenpressen können als Selbstfahrer ausgebildet sein oder von einem Schlepper gezogen werden. Der Schlepper kann wiederum die Antriebsleistung für Zuführ-, Press- und Bindeorgane der Ballenpresse zur Verfügung stellen. Bei der klassischen Prozessfolge muss das Feld also dreimal abgefahren werden. Während ein zeitlicher Abstand zwischen dem Mähen und Schwaden oftmals sinnvoll ist, um das Halmgut zwischenzeitlich trocknen zu lassen, können das Schwaden und Verpressen grundsätzlich unmittelbar aufeinander folgen. Das heißt einem ersten Gespann aus einem ersten Schlepper und einem Schwader kann unmittelbar ein zweites Gespann aus einem zweiten Schlepper und einer Ballenpresse folgen. Hierfür sind allerdings zwei Schlepper notwendig. Andererseits geht beim Einsatz eines einzigen Schleppers, der nacheinander erst den Schwader über das Feld zieht und danach die Rundballenpresse, unter Umständen wertvolle Zeit verloren.

Um den Ernteprozess effizienter zu gestalten, ist bereits vorgeschlagen worden, die Ballenpresse an den Schwader anzuhängen. Der Schlepper zieht also direkt den Schwader und zudem indirekt die Ballenpresse. Problematisch kann dabei allerdings sein, dass die Masse des Schwaders in der Regel wesentlich geringer ist als die der Ballenpresse. Aufgrund dessen kann der Schwader zwischen Schlepper und Ballenpresse aus der Spur gezogen werden, zum Beispiel wenn in Kurven oder am Hang seitliche Kräfte auf die Ballenpresse wirken. Dies verschlechtert auch die Lenkwirkung auf die Ballenpresse, das heißt beide Bearbeitungsgeräte laufen aus der vorgesehenen Fahrspur.

Aufgabe der Erfindung ist es, die Fahreigenschaften eines Gespanns mit einem Schwader und einer nachfolgenden Ballenpresse zu verbessern.

Die Aufgabe wird gelöst mit einem Gespann mit den Merkmalen des unabhängigen Patentanspruchs 1.

Vorteilhafte Ausführungsformen sind den abhängigen Ansprüchen entnehmbar.

Dafür wird ein Gespann geschaffen mit einem Schwader und einer Ballenpresse als Bearbeitungsgeräten, wobei die Ballenpresse einen Pressen-Rahmen aufweist, ein wenigstens indirekt hiermit verbundenes Pressen-Fahrwerk sowie eine Pressen-Kopplungsvorrichtung, und wobei der Schwader einen Schwader-Rahmen aufweist, ein wenigstens indirekt hiermit verbundenes Schwader-Fahrwerk sowie eine bezüglich einer Längsachse hinterseitig am Schwader-Rahmen angeordnete hintere Kopplungsvorrichtung mit einem hinteren Ankopplungspunkt, an welchem die Pressen-Kopplungsvorrichtung gelenkig sowie zug- und druckkraftübertragend ankoppelbar ist, wodurch die Ballenpresse anteilig am Schwader-Rahmen abstützbar ist.

Das Gespann dient zur Feldbearbeitung und weist wenigstens zwei Fahrzeuge auf, nämlich den Schwader sowie die Ballenpresse. Diese beiden Fahrzeuge dienen als Bearbeitungsgeräte zur Feldbearbeitung. Der Schwader bildet ein erstes Bearbeitungsgerät und die Rundballenpresse bildet ein zweites Bearbeitungsgerät, wobei die Bezeichnungen "erstes" und "zweites" die Reihenfolge innerhalb des Gespanns kennzeichnen und ansonsten nicht einschränkend auszulegen sind. Der Begriff "Gespann" bezieht sich darauf, dass die Ballenpresse im Betriebszustand an den Schwader angehängt ist. Im weiteren Sinne bezeichnet der Begriff allerdings auch die Fahrzeuge im entkoppelten Zustand. Im Betriebszustand ist bevorzugt als drittes Fahrzeug ein Schlepper vorgesehen, welcher auch als Traktor oder Zugmaschine bezeichnet werden kann. Ein derartiger Schlepper ist in jedem Falle selbstfahrend, also mit eigenem Fahrantrieb ausgestattet und dazu ausgebildet, ein Bearbeitungsgerät zu ziehen, in diesem Fall den Schwader.

Die Ballenpresse dient dazu, Erntegut wie beispielsweise Halmgut aufzunehmen und zu Erntegutballen zu verpressen. Das Erntegut kann mit einer Aufnahmevorrichtung, zum Beispiel einer Pick-up, vom Boden aufgenommen werden und durch eine Fördervorrichtung wie beispielsweise einen Förderrotor oder Schneidrotor, zu einer Presskammer geführt werden. In der Presskammer erfolgt die eigentliche Ballenbildung, bei welcher das Erntegut zu Erntegutballen geformt und verpresst wird. Die Ballenpresse kann als Rundballenpresse ausgebildet sein, aber auch als Quaderballenpresse. Sie weist einen Pressen-Rahmen auf, welcher das strukturelle Grundgerüst der Ballenpresse bildet und ihr wesentliche Stabilität verleiht. Dementsprechend sind weitere Komponenten der Ballenpresse fest oder beweglich am Pressen-Rahmen angeordnet. Der Pressen-Rahmen ist bevorzugt in sich starr ausgebildet. Ein Pressen-Fahrwerk ist wenigstens indirekt mit dem Pressen-Rahmen verbunden. Der Pressen-Rahmen, sowie evtl. von diesem getragene weitere Komponenten, sind ganz oder anteilig über das Pressen-Fahrwerk an einem Untergrund abstützbar. Das Pressen-Fahrwerk weist wenigstens eine Achse auf, die aus Stabilitätsgründen bevorzugt wenigstens zwei entlang der Querachse der Ballenpresse zueinander versetzte Räder aufweist. Zusätzlich kann ein Hilfsfahrwerk oder Stützfahrwerk vorgesehen sein, das zum Beispiel eine Aufnahmevorrichtung der Ballenpresse stützt. Außerdem weist die Ballenpresse eine Pressen-Kopplungsvorrichtung auf. Diese ist bevorzugt wenigstens indirekt mit dem Pressen-Rahmen verbunden. Insbesondere kann sie positionsfest am Pressen-Rahmen angeordnet sein, wobei sie auch einstückig mit diesem ausgebildet sein kann. In einigen Ausführungsformen kann derjenige Teil der Ballenpresse, insbesondere des Pressen-Rahmens, an dem die Pressen-Kopplungsvorrichtung angeordnet ist, als Deichselabschnitt oder als Deichsel bezeichnet werden. Die Pressen-Kopplungsvorrichtung dient zum Anhängen der Ballenpresse an ein vorausfahrendes Fahrzeug.

Der Schwader ist dazu ausgebildet, am Boden liegendes Erntegut, insbesondere Halmgut wie Gras oder Heu, mittels wenigstens einem Bearbeitungsorgan zu erfassen und zu einem Schwad zusammenzulegen. Der Schwader kann beispielsweise als Kreiselschwader, Sternradschwader, Kammschwader, Bandschwader oder dergleichen ausgebildet sein. Er weist einen Schwader-Rahmen auf. Dieser bildet das strukturelle Grundgerüst des Schwaders und verleiht ihm wesentliche Stabilität. Weitere Komponenten des Schwaders sind fest oder beweglich am Rahmen angeordnet. Der Schwader weist wenigstens ein Bearbeitungsorgan auf, das entweder direkt oder indirekt, also über wenigstens ein zwischengeordnetes Element, mit dem Schwader-Rahmen verbunden ist. Es bildet denjenigen Teil des Schwaders, der aktiv mit dem Erntegut zusammenwirkt. Die angetriebene Bewegung des wenigstens einen Bearbeitungsorgans dient zum Bewegen des Ernteguts, welches zusammengelegt wird, wobei durch die Bewegung des Schwaders entlang des Feldes ein langgestreckter Schwad entsteht. Wenigstens ein Bearbeitungsorgan kann an einem mit dem Rahmen verbundenen Auslegerarm angeordnet sein. Die Verbindung kann starr oder beweglich sein. Insbesondere kann der jeweilige Auslegerarm schwenkbar mit dem Rahmen verbunden sein. Außerdem weist der Schwader ein Schwader-Fahrwerk auf, das wenigstens indirekt mit dem Rahmen verbunden ist. Es dient dazu, den Schwader-Rahmen wenigstens anteilig abzustützen. Das Fahrwerk weist wenigstens eine Achse auf, die aus Stabilitätsgründen vorteilhaft wenigstens zwei entlang der Querachse des Schwaders zueinander versetzte Räder aufweist. Zusätzlich kann ein Hilfsfahrwerk vorgesehen sein, das das wenigstens eine Bearbeitungsorgan abstützt.

Bezüglich einer Längsachse hinterseitig ist am Schwader-Rahmen eine hintere Kopplungsvorrichtung angeordnet. Hier und im Folgenden beziehen sich die Begriffe "Längsachse", "Querachse" und "Hochachse" auf das gesamte Gespann bei gerader Ausrichtung. Bei gerader Ausrichtung, also zum Beispiel bei ebener Geradeausfahrt, stimmen die entsprechenden Achsen der einzelnen Fahrzeuge richtungsmäßig überein, so dass man statt zum Beispiel von einer Längsachse des Gespanns gleichbedeutend auch von einer Längsachse des Schwaders oder einer Längsachse der Ballenpresse sprechen kann. Bezüglich der Längsachse ist die hintere Kopplungsvorrichtung hinterseitig am Schwader-Rahmen angeordnet, was die Möglichkeit einschließt, dass sie ganz oder teilweise einstückig mit dem Schwader-Rahmen ausgebildet ist. Sie ist bevorzugt positionsfest bezüglich des Schwader-Rahmens angeordnet, wenngleich Ausgestaltungen denkbar sind, in denen sie zum Beispiel gegenüber dem Schwader-Rahmen verstellbar ist. In letzterem Fall ist sie bevorzugt zumindest starr mit dem Rahmen verbindbar und/oder relativ zum Schwader-Rahmen arretierbar.

Die hintere Kopplungsvorrichtung weist einen hinteren Ankopplungspunkt auf. Dieser ist zum Anhängen der Ballenpresse an den Schwader vorgesehen. Man kann auch sagen, dass die hintere Kopplungsvorrichtung den hinteren Ankopplungspunkt definiert. Der Begriff "Punkt" ist selbstverständlich nicht im mathematischen Sinn zu verstehen, sondern bezieht sich auf einen gewissen Bereich, der allerdings im Vergleich zu den Abmessungen des gesamten Schwaders klein und somit "punktartig" ist. Die hintere Kopplungsvorrichtung ist dazu ausgebildet, eine Verbindung zur Ballenpresse herzustellen, damit diese an den Schwader angehängt werden kann. Die hintere Kopplungsvorrichtung ist zum Zusammenwirken mit der Pressen-Kopplungsvorrichtung auf Seiten der Ballenpresse ausgebildet. Sie kann zum Beispiel eine Kugelkopfkupplung aufweisen, die mit einem Kupplungsmaul auf Seiten der Ballenpresse zusammenwirkt. Durch die hintere Kopplungsvorrichtung kann also die Ballenpresse an den Schwader angehängt werden, so dass sie insbesondere mittelbar vom Schlepper gezogen werden kann, während dieser den Schwader zieht. Dabei ist die Pressen-Kopplungsvorrichtung gelenkig sowie zug- und druckkraftübertragend an den hinteren Ankopplungspunkt ankoppelbar. Das heißt die Ankopplung ermöglicht eine Schwenkbewegung um den hinteren Ankopplungspunkt, bevorzugt sowohl um die Hochachse als auch um die Querachse und/oder um die Längsachse. Hierdurch sind Änderungen der Ausrichtung der Ballenpresse relativ zum Schwader möglich, zum Beispiel bei Kurvenfahrt oder bei sich ändernder Bodenneigung. Außerdem ist der hintere Ankopplungspunkt derjenige Bereich, in dem in angekoppeltem Zustand eine Zugkraft zwischen Schwader und Ballenpresse übertragen wird, durch welche die Ballenpresse vorwärts gezogen wird, oder aber eine Druckkraft, durch welche die Ballenpresse bei Rückwärtsfahrt rückwärts geschoben wird.

Durch die Ankopplung der Pressen-Kopplungsvorrichtung an den hinteren Ankopplungspunkt ist die Ballenpresse anteilig am Schwader-Rahmen abstützbar. Das heißt ein Teil der Gewichtskraft der Ballenpresse kann als Abstützkraft über die Pressen-Kopplungsvorrichtung und die hintere Kopplungsvorrichtung abgestützt werden. Dieser Teil wird am Schwader-Rahmen abgestützt und somit im Weiteren über das Schwader-Fahrwerk. Entsprechend wird dieser Teil nicht über das Pressen-Fahrwerk abgestützt. Die Pressen-Kopplungsvorrichtung und die hintere Kopplungsvorrichtung sind somit dazu eingerichtet, eine derartige, entlang der Hochachse wirkende Abstützkraft zu übertragen. Während die Zug- oder Druckkraft, durch welche die Ballenpresse vorwärts gezogen oder rückwärts geschoben wird, über den hinteren Ankopplungspunkt übertragen wird, könnte die Abstützkraft prinzipiell auch über einen anderen Punkt oder Bereich der hinteren Kopplungsvorrichtung übertragen werden.

Der Schwader verfügt normalerweise über keinen eigenen Antrieb, insbesondere keinen eigenen Fahrantrieb. Wie bereits erwähnt, ist bevorzugt vorgesehen, dass der Schwader am Schlepper anhängbar ist, um von diesem gezogen zu werden. Dementsprechend kann eine bezüglich der Längsachse vorderseitig am Schwader-Rahmen angeordnete vorderen Kopplungsvorrichtung vorgesehen sein, mit einem vorderen Ankopplungspunkt zum Anhängen des Schwaders an einem Schlepper. Auch die vordere Kopplungsvorrichtung kann ganz oder teilweise in den Schwader-Rahmen integriert sein und insbesondere ganz oder teilweise einstückig mit diesem ausgebildet sein. Auch sie ist bevorzugt zumindest starr mit dem Rahmen verbindbar oder auch dauerhaft starr mit dem Rahmen verbunden, zum Beispiel verschweißt, verschraubt oder vernietet. Sie ist dazu ausgebildet, eine Verbindung zum Schlepper herzustellen, damit dieser den Schwader ziehen kann. Entsprechend ist sie zum Zusammenwirken mit einer komplementären Kopplungsvorrichtung auf Seiten des Schleppers ausgebildet. So kann zum Beispiel ein Kupplungsmaul vorgesehen sein, das mit einer Kugelkopfkupplung auf Seiten des Schleppers zusammenwirkt. Über die vordere Kopplungsvorrichtung kann der Schwader auch anteilig am Schlepper abgestützt werden.

Erfindungsgemäß ist ein Lastverlagerungselement dazu eingerichtet, ein zwischen dem Schwader-Rahmen und der Ballenpresse wirkendes Verlagerungs-Drehmoment bezüglich des hinteren Ankopplungspunkts auszuüben, durch welches eine Pressen-Achslast der Ballenpresse unter Erhöhung einer Schwader-Achslast des Schwaders reduzierbar ist. Die Pressen-Achslast bezeichnet dabei die Achslast wenigstens einer Achse des Pressen-Fahrwerks. Im Fall mehrerer Achsen kann sich dies insbesondere auch auf die Summe der Achslasten des gesamten Pressen-Fahrwerks beziehen. Da die Ballenpresse anteilig am Schwader-Rahmen abstützbar ist, kann diese Summe im Allgemeinen kleiner sein als die Gewichtskraft der Ballenpresse. Die Schwader-Achslast bezeichnet die Achslast wenigstens einer Achse des Schwader-Fahrwerks. Im Fall mehrerer Achsen kann sich dies insbesondere auch auf die Summe der Achslasten des gesamten Schwader-Fahrwerks beziehen. Da die Ballenpresse anteilig am Schwader-Rahmen abstützbar ist, kann diese Summe im Allgemeinen größer sein als die Gewichtskraft des Schwaders, wobei allerdings zu berücksichtigen ist, dass der Schwader seinerseits über die vordere Kopplungsvorrichtung anteilig am Schlepper abgestützt sein kann.

Das Gespann weist ein Lastverlagerungselement auf. Dieses kann wenigstens teilweise zum Schwader und/oder zur Ballenpresse gehören. Es kann sich aber auch um ein Element handeln, das keinem der Bearbeitungsgeräte dauerhaft zugeordnet ist und das nur bei Bedarf, beim Zusammenstellen des Gespanns, montiert wird. Das Lastverlagerungselement ist dazu eingerichtet, ein Verlagerungs-Drehmoment auszuüben, das zwischen dem Schwader-Rahmen und der Ballenpresse wirkt. Es versteht sich, dass aufgrund des Prinzips "actio=reactio" hierbei ein Drehmoment auf den Schwader-Rahmen wirkt, während ein entgegengesetztes Drehmoment auf die Ballenpresse wirkt. Wenngleich das Drehmoment auf den Schwader-Rahmen wirkt, muss das Lastverlagerungselement nicht direkt mit dem Schwader-Rahmen verbunden sein. Es könnte zum Beispiel mit einem zwischengeordneten Bauteil wie der hinteren Kopplungsvorrichtung verbunden sein, so dass eine indirekte Kraft- und Drehmomentübertragung auf den Schwader-Rahmen erfolgt. Das Drehmoment wirkt bezüglich des hinteren Ankopplungspunkts. Das heißt der hintere Ankopplungspunkt stellt den Bezugspunkt des Drehmoments dar, von dem aus entsprechend der allgemeinen Definition des Drehmoments $\vec{M}$

$$\vec{M} = \vec{r} \times \vec{F}$$

der Verbindungsvektor $\vec{r}$ zum Wirkungspunkt einer das Drehmoment erzeugenden Kraft $\vec{F}$ verläuft. Das Lastverlagerungselement erzeugt wenigstens eine Kraft, evtl. auch eine Mehrzahl von Kräften, aus welcher das Verlagerungs-Drehmoment resultiert. Qualitativ wirkt das Verlagerungs-Drehmoment auf ein Anheben der Ballenpresse hin. Dementsprechend wird die Pressen-Achslast verringert. Gleichzeitig erhöht sich die über die Kopplungsvorrichtungen übertragene Abstützkraft, was zu einer Erhöhung der Schwader-Achslast führt. Dieser Effekt kann noch dadurch verstärkt werden, dass - wie in vielen Fällen - die hintere Kopplungsvorrichtung bezüglich der Längsachse hinter dem Schlepper-Fahrwerk angeordnet ist. In diesem Fall führt die erhöhte Abstützkraft zu einem Drehmoment bezüglich der hintersten oder einzigen Achse des Schwader-Fahrwerks, wodurch vor dem Schwader-Fahrwerk liegenden Teile angehoben werden. Dementsprechend verringert sich eine Abstützung des Schwaders am Schlepper, woraus wiederum eine weitere Erhöhung der Schwader-Achslast resultiert. Somit verringert sich die Achslast einer Hinterachse des Schleppers, während sich die Achslast einer Vorderachse des Schleppers leicht vergrößern kann.

Der Begriff "Lastverlagerungselement" deutet darauf hin, dass durch die Wirkung dieses Elements Achslast von der Ballenpresse (sowie gegebenenfalls vom Schlepper) zum Schwader hin verlagert wird. Die Summe der Achslasten des Gespanns bleibt dabei unverändert. Die Reduzierung der Achslast der Ballenpresse hat normalerweise keine nachteiligen Auswirkungen, da sie relativ gering ausfallen kann. Eine Gesamtmasse einer Rundballenpresse kann zum Beispiel im Bereich von 5-6 t liegen, während eine Gesamtmasse eines Doppelkreiselschwaders zum Beispiel im Bereich von 2 t liegen kann. Wird zum Beispiel die Abstützkraft um das Äquivalent von 1 t erhöht (also ca. 9,81 kN), verringert sich die Pressen-Achslast nur um ca. 20%, während sich die Schwader-Achslast um wenigstens 50% erhöht. Die Erhöhung der Schwader-Achslast führt dazu, dass der Eingriff des Schwader-Fahrwerks mit dem Untergrund verbessert wird. Das heißt die Bodenhaftung wird verbessert, wodurch der Schwader insgesamt stabilisiert wird. Das Risiko, dass der Schwader durch die Ballenpresse seitwärts aus der Spur gezogen wird, wird somit deutlich reduziert.

Das Verlagerungs-Drehmoment kann in unterschiedlicher Weise erzeugt werden. Bevorzugt ist das Lastverlagerungselement dazu eingerichtet ist, eine Verlagerungs-Kraft zwischen einem Schwader-Ansatzpunkt und einem Pressen-Ansatzpunkt entlang einer durch die Ansatzpunkte verlaufenden Wirkungsachse zu erzeugen, wobei die Wirkungsachse gegenüber dem hinteren Ankopplungspunkt versetzt ist. Der Schwader-Ansatzpunkt ist dabei am Schwader angeordnet, bevorzugt am Schwader-Rahmen. Entsprechend ist der Pressen-Ansatzpunkt an der Ballenpresse angeordnet, bevorzugt am Pressen-Rahmen. Jeder der Ansatzpunkte könnte aber beispielsweise auch an einem eigenen Element angeordnet sein, welches starr oder beweglich mit dem jeweiligen Rahmen verbunden ist. Über den jeweiligen Ansatzpunkt erfolgt die Einleitung der Verlagerungs-Kraft in den Schwader einerseits und in die Ballenpresse andererseits. Streng genommen handelt es sich um zwei entgegengesetzte Kräfte, wobei eine Kraft am Schwader-Ansatzpunkt angreift und eine betragsmäßig gleich große, aber entgegengesetzte Kraft am Pressen-Ansatzpunkt angreift. Die beiden Ansatzpunkte definieren eine Wirkungsachse, entlang welcher die Verlagerungs-Kraft verläuft. Die Wirkungsachse verläuft versetzt zum hinteren Ankopplungspunkt, also nicht durch diesen hindurch. Dementsprechend führt die Verlagerungs-Kraft zu einem Drehmoment bezüglich des hinteren Ankopplungspunktes, nämlich dem Verlagerungs-Drehmoment. Wenngleich es bevorzugt ist, genau ein Lastverlagerungselement, einen Schwader-Ansatzpunkt und einen Pressen-Ansatzpunkt vorzusehen, wäre zum Beispiel eine Mehrzahl von Lastverlagerungselementen denkbar, von denen jedes über ein eigenes Paar von Ansatzpunkten eine Verlagerungs-Kraft erzeugt.

Es sind sinnvolle Ausgestaltungen der Erfindung denkbar, in denen ein Ansatzpunkt gegenüber dem zugehörigen Rahmen beweglich ist, zum Beispiel verschiebbar. Eine bevorzugte Ausgestaltung sieht allerdings vor, dass der Schwader-Ansatzpunkt bezüglich des Schwader-Rahmens stationär angeordnet ist und/oder der Pressen-Ansatzpunkt bezüglich des Pressen-Rahmens stationär angeordnet ist. Das heißt die Position des jeweiligen Ansatzpunktes am Rahmen ist fest, was insbesondere für die Positionen beider Ansatzpunkte gelten kann.

Vorteilhaft ist das Lastverlagerungselement gelenkig mit wenigstens einem Ansatzpunkt verbunden. Dies hat insbesondere dann Vorteile, wenn der Ansatzpunkt stationär bezüglich des zugehörigen Rahmens angeordnet ist. Die gelenkige Verbindung trägt dazu bei, dass das Lastverlagerungselement einer Relativbewegung zwischen Schwader und Ballenpresse folgen kann. Die gelenkige Verbindung kann eine Schwenkbarkeit mit ein, zwei oder drei Freiheitsgraden ermöglichen. Beispielsweise kann das Lastverlagerungselement über ein Kugelgelenk mit dem jeweiligen Ansatzpunkt verbunden sein. Weiter vorteilhaft kann das Lastverlagerungselement gelenkig mit beiden Ansatzpunkten verbunden sein.

Gemäß einer Ausgestaltung kann das Lastverlagerungselement gewissermaßen passiv ausgebildet sein, wobei das Verlagerungs-Drehmoment (sowie gegebenenfalls die Verlagerungs-Kraft) beispielsweise mittels eines Federelements erzeugt werden kann. Das Federelement könnte durch einen Benutzer manuell gespannt werden, um ein gewünschtes Verlagerungs-Drehmoment zu erzeugen. Dies ist allerdings für den Benutzer umständlich und im Allgemeinen auch anstrengend. Daher weist das Lastverlagerungselement bevorzugt einen Aktor auf, der bevorzugt als Linearaktor ausgebildet ist. Der Aktor wird durch eine Energiequelle gespeist, die in einem der Bearbeitungsgeräte, bevorzugt aber im Schlepper angeordnet sein kann. Der Aktor kann insbesondere als elektrischer, elektrohydraulischer, hydraulischer oder pneumatischer Aktor ausgebildet sein. Die zum Betrieb notwendige Antriebsenergie kann über entsprechende Leitungen übertragen werden, zum Beispiel elektrische Leitungen, Druckluft- oder Hydraulikleitungen. Die Leitungen können Fahrzeuge des Gespanns miteinander verbinden, wobei geeignete Verbindungssysteme, zum Beispiel Stecker oder Schraubverbindungen etc., vorgesehen sein können und grundsätzlich bekannt sind. Das Lastverlagerungselement kann auch eine Mehrzahl von Aktoren aufweisen, die gleichartig oder unterschiedlich ausgebildet sein können. Insbesondere kann wenigstens ein Aktor als Linearaktor ausgebildet sein. Dieser kann beispielsweise die oben genannte Verlagerungs-Kraft entlang der Wirkungsachse erzeugen. Es versteht sich, dass der Aktor insbesondere dazu eingerichtet sein kann, ein Verlagerungs-Drehmoment und/oder eine Verlagerungs-Kraft variabler Stärke zu erzeugen. Allerdings kann der Aktor das Verlagerungs-Drehmoment auch indirekt beeinflussen. Zum Beispiel könnte das Verlagerungs-Drehmoment durch ein Federelement erzeugt werden, wobei eine Vorspannung des Federelements wiederum durch den Aktor eingestellt wird.

Teilweise können Lageänderungen zwischen Schwader und Ballenpresse zum Beispiel dadurch ausgeglichen werden, dass das Lastverlagerungselement mit wenigstens einem Ansatzpunkt gelenkig verbunden ist. Dies kann aber in einigen Fällen nicht ausreichen, zum Beispiel wenn sich ein Abstand zwischen den Ansatzpunkten verändert. Aus diesen und anderen Gründen ist es bevorzugt, dass das Lastverlagerungselement elastisch auslenkbar ist. Insbesondere kann eine Länge des Lastverlagerungselement in Richtung der Wirkungsachse elastisch veränderbar sein. Das heißt das Lastverlagerungselement kann elastisch verlängerbar oder verkürzbar sein. Eine elastische Auslenkbarkeit kann beispielsweise durch einen hydraulischen oder pneumatischen Aktor realisiert werden. Es wäre aber zum Beispiel auch möglich, einen Aktor, der für sich genommen keine elastische Auslenkung unterstützt, mit einem Federelement zu kombinieren.

Hinsichtlich der Anordnung der Ansatzpunkte sind unterschiedlichste Möglichkeiten gegeben. Diese lassen sich insbesondere hinsichtlich der Position relativ zum hinteren Ankopplungspunkt unterscheiden. Entsprechend der Anordnung des Schwaders vor der Ballenpresse ist der Schwader-Ansatzpunkt bezüglich der Längsachse bevorzugt vor dem Pressen-Ansatzpunkt angeordnet. Allerdings ist dies nicht zwangsläufig der Fall, es wären zum Beispiel auch Ausgestaltungen möglich, in denen die Ansatzpunkte bezüglich der Längsachse gleich positioniert sind und bezüglich der Hochachse übereinander angeordnet sind. Dies kann allerdings u. A. im Hinblick auf Bauraum beziehungsweise Bauhöhe problematisch sein. Vorteilhaft ist wenigstens einer der Ansatzpunkte bezüglich der Hochachse höher angeordnet ist als der hintere Ankopplungspunkt. Dies kann auch für beide Ansatzpunkte gelten. Zum einen trägt eine derartige Anordnung allgemein dazu bei, eine mögliche Kollision mit einem der Rahmen oder einer der Kopplungsvorrichtungen zu vermeiden. Außerdem beeinträchtigt diese Anordnung nicht die Bodenfreiheit. Je nach Ausgestaltung kann allerdings auch wenigstens ein Ansatzpunkt bezüglich der Hochachse auf Höhe oder unterhalb des hinteren Ankopplungspunkts angeordnet sein.

Wenn das Gespann eine Kurve fährt, führt dies zu einer horizontalen Schwenkbewegung der Ballenpresse bezüglich des Schwaders um den hinteren Ankopplungspunkt. Dies geht im Allgemeinen auch mit einer Lageveränderung der Ansatzpunkte einher. Sofern sich hierdurch auch der Abstand ändert, kann dies zum Beispiel bei einem elastisch auslenkbaren Lastverlagerungselement zu einer Änderung der Verlagerungs-Kraft führen. Dies ist allgemein eher nachteilig. Gemäß einer Ausführungsform ist vorgesehen, dass einer der Ansatzpunkte, bevorzugt der Schwader-Ansatzpunkt, gegenüber dem hinteren Ankopplungspunkt quer zur Hochachse um höchstens 50 cm, bevorzugt höchstens 20 cm, weiter bevorzugt höchstens 10 cm, versetzt ist. "Quer zur Hochachse" bedeutet in horizontaler Richtung, also in Richtung der Längsachse und/oder in Richtung der Querachse. Idealerweise ist der Ansatzpunkt entlang der Hochachse fluchtend mit dem hinteren Ankopplungspunkt angeordnet, also entweder vertikal darunter oder vertikal darüber. In diesem Fall führt eine Kurvenfahrt zu keiner Veränderung des Abstandes der Ansatzpunkte. Sofern ein geringfügiger horizontaler Versatz besteht, der wie beschrieben höchstens 50 cm beträgt, wirkt sich eine Kurvenfahrt nur wenig auf den Abstand und somit auf die Verlagerungs-Kraft aus.

Bevorzugt verläuft die Wirkungsachse bezüglich der Hochachse oberseitig des hinteren Ankopplungspunkts und das Lastverlagerungselement ist dazu eingerichtet, zur Verringerung der Pressen-Achslast eine Zugkraft auszuüben. Damit die Wirkungsachse oberseitig des hinteren Ankopplungspunkts verläuft, muss wenigstens ein Ansatzpunkt bezüglich der Hochachse oberhalb des hinteren Ankopplungspunkts angeordnet sein. Insbesondere kann dies für beide Ansatzpunkte gelten. Um bei dieser Anordnung eine Verringerung der Pressen-Achslast und eine Erhöhung der Schwader-Achslast zu erreichen, muss das Lastverlagerungselement als Verlagerungs-Kraft eine Zugkraft ausüben.

Vorteilhaft ist das Lastverlagerungselement zur Anpassung des Verlagerungs-Drehmoments ansteuerbar. Eine derartige Ansteuerung kann durch Übertragung eines Steuersignals zum Lastverlagerungselement selbst erfolgen. In diesem Sinne wäre allerdings auch zum Beispiel eine Veränderung einer hydraulischen oder pneumatischen Beaufschlagung als "Ansteuerung" anzusehen. Insbesondere kann das Lastverlagerungselement zur Anpassung der Verlagerungs-Kraft ansteuerbar sein. Vorteilhaft ist das Gespann derart eingerichtet, dass das Lastverlagerungselement vom Schlepper aus ansteuerbar ist.

Es ist einerseits denkbar, dass die Ansteuerung des Lastverlagerungselements entsprechend einer Benutzereingabe erfolgt. Das heißt der Benutzer kann zum Beispiel vom Schlepper aus die Einstellung des Lastverlagerungselements vornehmen. Für einige Anwendungen kann dies ausreichend sein. Eine vorteilhafte Ausgestaltung sieht allerdings vor, dass das Gespann eine Steuereinheit aufweist, die dazu eingerichtet ist, das Lastverlagerungselement anzusteuern, um das Verlagerungs-Drehmoment in Abhängigkeit von wenigstens einem Parameter automatisch anzupassen. Das heißt die Steuereinheit kann aus dem wenigstens einen Parameter automatisch ermitteln, wie das Lastverlagerungselement anzusteuern ist, und die entsprechende Ansteuerung auch vornehmen. Hierdurch wird der Benutzer entlastet und es können benutzerseitige Fehler vermieden werden. Die Steuereinheit kann die vorzunehmende Ansteuerung, also ein einzustellendes Verlagerungs-Drehmoment oder eine einzustellende Verlagerungs-Kraft, zum Beispiel aus dem wenigstens einen Parameter berechnen oder aus einer Nachschlagetabelle ermitteln.

Das Verlagerungs-Drehmoment kann in Abhängigkeit von unterschiedlichen Parametern angepasst werden, wobei insbesondere auch Kombinationen von Parametern sinnvoll sein können. Insbesondere kann wenigstens ein Parameter ausgewählt sein aus einer Fahrgeschwindigkeit, einer Fahrtrichtung, einer Bodenneigung, einer Bodenbeschaffenheit, einer Seitendrift des Schwaders, einer Achslast sowie einer Abstützkraft der Ballenpresse. Eine höhere Fahrgeschwindigkeit kann das Risiko dafür erhöhen, dass der Schwader aus der Spur gezogen wird, weshalb mit zunehmender Fahrgeschwindigkeit die Schader-Achslast erhöht werden kann. Eine Änderung der Fahrtrichtung deutet auf eine Kurvenfahrt hin, die eine bessere Stabilisierung des Schwaders nötig machen kann. Auch kann die Fahrtrichtung beispielsweise darüber entscheiden, wie das Gespann in Relation zu einem geneigten Gelände orientiert ist. Bei einer Fahrt quer zur Richtung des Gefälles sollte der Schwader durch eine Erhöhung der Schwader-Achslast stabilisiert werden. Die Information über die Fahrtrichtung kann dabei mit einer Information über die lokal vorliegende Bodenneigung kombiniert werden. Es wäre auch möglich, die Schwader-Achslast unabhängig von der Fahrtrichtung in Abhängigkeit von der Bodenneigung zu erhöhen. Dabei ist es auch möglich, die Orientierung des Schwaders relativ zur Wirkrichtung der Schwerkraft zu ermitteln, woraus sich die Bodenneigung ergibt.

Neben der Bodenneigung spielt auch die Bodenbeschaffenheit eine Rolle, zum Beispiel die Zusammensetzung des Bodens, ein möglicher Bodenbewuchs oder - belag, sowie eine Bodenfeuchte. All diese Eigenschaften beeinflussen die Reibung zwischen dem Schwader-Fahrwerk und dem Boden und somit die Notwendigkeit einer Erhöhung der Schwader-Achslast. Auch kann konkret das Vorliegen sowie gegebenenfalls das Ausmaß einer Seitendrift des Schwaders zugrunde gelegt werden. Dabei bezeichnet der Begriff "Seitendrift" eine Bewegung des Schwaders in Richtung der Querachse. Ebendiese soll beim erfindungsgemäßen Gespann vermieden oder minimiert werden und kann daher als Parameter zugrunde gelegt werden. Möglicherweise zusätzlich zu einem der bisher genannten Parameter kann auch wenigstens eine Achslast, also die Schwader-Achslast und/oder die Pressen-Achslast, relevant sein. Das heißt es kann eine zu erreichende Achslast vorgegeben sein, woraufhin die Steuereinheit ermittelt, welches Verlagerungs-Drehmoment hierfür einzustellen ist. Entsprechend kann eine zu erreichende Abstützkraft der Ballenpresse, mit welcher diese seitens des Schwaders abgestützt wird, vorgegeben sein und das Verlagerungs-Drehmoment kann automatisch eingestellt werden.

Wenigstens ein Parameter kann von einem Benutzer eingestellt oder eingegeben werden. Dies ermöglicht dem Benutzer eine zumindest teilweise Einflussnahme auf das Verlagerungs-Drehmoment und somit auf die Achslastverteilung. Andererseits kann insbesondere ein unerfahrener Benutzer hierbei Fehler machen. Außerdem kann die benutzerseitige Eingabe von Parametern als Ablenkung oder Belastung empfunden werden. Daher ist es bevorzugt, dass die Steuereinheit dazu eingerichtet ist, wenigstens einen Parameter automatisch zu erfassen. Dies schließt ausdrücklich die Möglichkeit ein, dass wenigstens ein Parameter benutzerseitig eingebbar ist, während wenigstens ein anderer Parameter automatisch erfassbar ist. Die automatische Erfassung kann insbesondere über eine Sensoreinheit erfolgen, mit welcher die Steuereinheit signalübertragend verbunden ist. Die Sensoreinheit kann an einem der Bearbeitungsgeräte angeordnet sein, insbesondere am gleichen Bearbeitungsgerät wie die Steuereinheit. Sie kann aber auch zum Beispiel am Schlepper angeordnet sein oder auch außerhalb des Gespanns. Neben einer Verbindung mit einer Sensoreinheit wäre es auch möglich, dass die Steuereinheit auf eine Datenquelle zugreift, mit welcher sie zum Beispiel über ein Netzwerk verbunden sein kann. Beispielsweise könnte die Datenquelle Daten bezüglich Bodenneigung und/oder Bodenbeschaffenheit zur Verfügung stellen, die die Steuereinheit mit Daten bezüglich der Position und/oder der Fahrtrichtung des Gespanns verknüpfen kann, um zu ermitteln, welche Parameter an der aktuellen Position oder entlang einer Fahrroute zu erwarten sind. Die Datenquelle könnte auch in eines der Fahrzeuge des Gespanns integriert sein, gegebenenfalls sogar in die Steuereinheit. Die Bodenneigung kann alternativ aber auch über Orientierungssensoren aus der aktuellen dreidimensionalen Orientierung des Schwaders oder eines anderen Fahrzeugs relativ zur Vertikalen ermittelt werden. Die Achslasten können zum Beispiel über Kraft- oder Drucksensoren ermittelt werden. Die jeweilige Achslast kann dabei eine Regelgröße in einem Regelkreis bilden, wobei das Verlagerungs-Drehmoment die Stellgröße bildet. Die Seitendrift kann beispielsweise mittels Trägheitssensoren ermittelt werden.

Durch die Erfindung wird weiterhin ein Bearbeitungsgerät für ein erfindungsgemäßes Gespann zur Verfügung gestellt. Dieses Bearbeitungsgerät weist das Lastverlagerungselement auf. Bei dem Bearbeitungsgerät handelt es sich entweder um den Schwader oder die Ballenpresse. Das Lastverlagerungselement kann lösbar oder nicht-lösbar mit dem Rahmen des Bearbeitungsgeräts verbunden sein. Im Falle des Schwaders kann es mit einem Schwader-Ansatzpunkt verbunden sein, im Falle der Ballenpresse mit dem Pressen-Ansatzpunkt. Das Bearbeitungsgerät kann die Steuereinheit aufweisen, die dazu eingerichtet ist, das Lastverlagerungselement anzusteuern, um das Verlagerungs-Drehmoment in Abhängigkeit von wenigstens einem Parameter automatisch anzupassen. Weitere bevorzugte Ausgestaltungen des Bearbeitungsgeräts entsprechen denen des erfindungsgemäßen Gespanns.

Die Erfindung betrifft außerdem ein Verfahren zum Betreiben eines Gespanns mit einem Schwader und einer Ballenpresse als Bearbeitungsgeräten, wobei die Ballenpresse einen Pressen-Rahmen aufweist, ein wenigstens indirekt hiermit verbundenes Pressen-Fahrwerk sowie eine Pressen-Kopplungsvorrichtung, und wobei der Schwader einen Schwader-Rahmen aufweist, ein wenigstens indirekt hiermit verbundenes Schwader-Fahrwerk sowie eine bezüglich einer Längsachse hinterseitig am Schwader-Rahmen angeordnete hintere Kopplungsvorrichtung mit einem hinteren Ankopplungspunkt, an welchem die Pressen-Kopplungsvorrichtung gelenkig sowie zug- und druckkraftübertragend ankoppelbar ist, wodurch die Ballenpresse anteilig am Schwader-Rahmen abstützbar ist.

Erfindungsgemäß übt ein Lastverlagerungselement ein zwischen dem Schwader-Rahmen und der Ballenpresse wirkendes Verlagerungs-Drehmoment bezüglich des hinteren Ankopplungspunkts aus, durch welches eine Pressen-Achslast der Ballenpresse unter Erhöhung einer Schwader-Achslast des Schwaders reduziert wird. Die genannten Begriffe wurden bereits mit Bezug auf das erfindungsgemäße Gespann erläutert und werden daher nicht nochmals erklärt. Bevorzugte Ausgestaltungen des erfindungsgemäßen Verfahrens entsprechen denen des erfindungsgemäßen Gespanns.

Im Folgenden wird die Erfindung anhand von Figuren beschrieben. Die Figuren sind lediglich beispielhaft und schränken den allgemeinen Erfindungsgedanken nicht ein. Es zeigen

Fig. 1     eine Draufsicht eines erfindungsgemäßen Gespanns;

Fig. 2     eine Seitenansicht des Gespanns aus Fig.1 in einem ersten Zustand;

Fig. 3     eine Seitenansicht des Gespanns aus Fig.1 in einem zweiten Zustand; sowie

Fig. 4     ein Blockdiagramm mit Komponenten zur Durchführung eines erfindungsgemäßen Verfahrens.

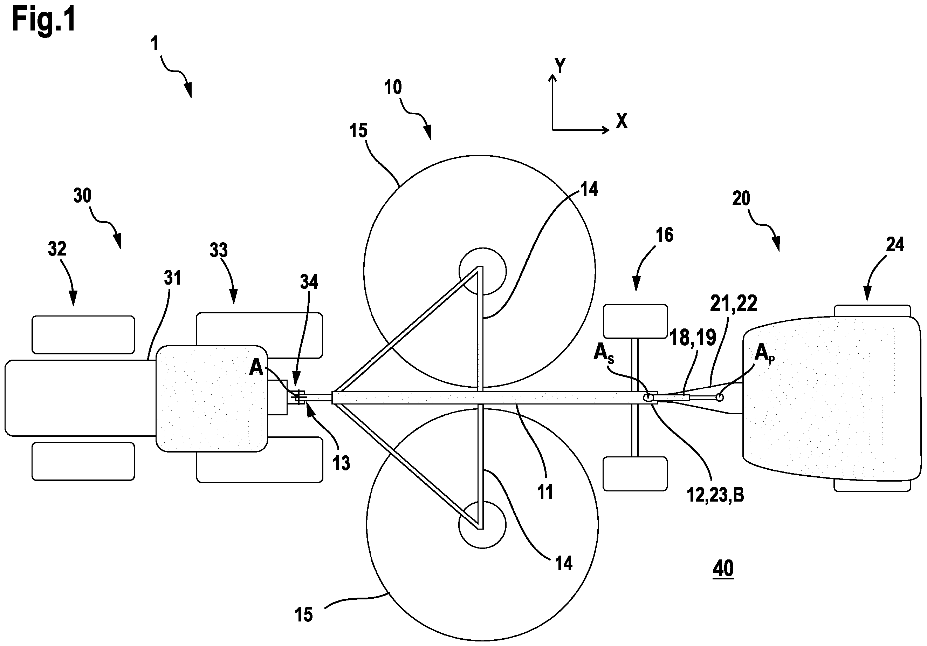

Fig. 1 bis 3 zeigen ein erfindungsgemäßes Gespann 1 mit einem Schlepper 30, einem Schwader 10, in diesem Fall einem Kreiselschwader, sowie einer Ballenpresse 20, in diesem Fall einer Rundballenpresse. In den folgenden Figuren sind jeweils eine Längsachse X, eine Querachse Y sowie eine Hochachse Z eingezeichnet. Diese bezeichnen Achsen des Schwaders 10 ebenso wie der Ballenpresse 20, die in den Figuren parallel ausgerichtet sind, entsprechend einer ebenen Geradeausfahrt. Der Schlepper 30 weist eine Fahrzeugkörper 31 mit einer daran angeordneten Vorderachse 32 sowie einer Hinterachse 33 auf. Der Schwader 10 weist einen Schwader-Rahmen 11 auf, der über ein Schwader-Fahrwerk 16 mit einer einzigen Achse gegenüber einem Boden 40 abgestützt ist. Mit dem Schwader-Rahmen 11 sind zwei Auslegerarme 14 verbunden, an denen jeweils ein Rechkreisel 15 angeordnet ist. Die Auslegerarme 14 können einschließlich der Rechkreisel 25 wahlweise - wie in Fig.1 dargestellt - angehoben oder abgesenkt werden, wobei sie in letzterem Fall durch ein Hilfsfahrwerk (ohne Bezugszeichen) am Boden 40 abgestützt sind. Vorderseitig ist am Schwader-Rahmen 11 eine vordere Kopplungsvorrichtung 13 angeordnet, die zum Beispiel ein Kupplungsmaul aufweisen kann und die einen vorderen Ankopplungspunkt A definiert. Sie kann mit einer entsprechenden Schlepper-Kopplungsvorrichtung 34, zum Beispiel einer Kugelkopfkupplung, des Schleppers 30 zusammenwirken, so dass der Schwader 10 vom Schlepper 30 gezogen werden kann. Des Weiteren ist hinterseitig am Rahmen 11 eine hintere Kopplungsvorrichtung 12 angeordnet, die beispielsweise eine Kugelkopfkupplung aufweisen kann und einen hinteren Ankopplungspunkt B definiert.

Die Ballenpresse 20 weist einen Pressen-Rahmen 21 auf, der über ein Pressen-Fahrwerk 24 mit einer einzigen Achse am Boden 40 abgestützt ist. Bezüglich der Längsachse X vorderseitig weist der Pressen-Rahmen 21 einen Deichselabschnitt 22 eine Pressen-Kopplungsvorrichtung 23 auf, die zum Beispiel als Kupplungsmaul ausgebildet sein kann. Diese kann mit der hinteren Kopplungsvorrichtung 12 zusammenwirken, wodurch die Ballenpresse 20 an den Schwader 10 angehängt werden kann. Auf diese Weise können der Schlepper 30, der Schwader 10 und die Ballenpresse 20 das Gespann 1 bilden. Während des Betriebs des Gespanns 1 erfassen die Rechkreisel 15 am Boden liegendes Erntegut und legen dieses als Schwad ab, der wiederum von der Ballenpresse 20 aufgenommen und zu Erntegutballen verpresst wird.

Dabei ist die Pressen-Kopplungsvorrichtung 23 im hinteren Ankopplungspunkt B gelenkig mit der hinteren Kopplungsvorrichtung 12 verbunden, wodurch bei Kurvenfahrten oder bei sich ändernder Bodenneigung eine Schwenkbewegung der Ballenpresse 20 relativ zum Schwader 10 möglich ist, und zwar sowohl um die Hochachse Z als auch um die Längsachse X sowie um die Querachse Y. Des Weiteren ist die Ballenpresse 20 anteilig über die beiden Kopplungsvorrichtungen 12, 23 am Schwader-Rahmen 11 abstützbar.

Fig.1 bis 3 zeigen außerdem ein Lastverlagerungselement 18, welches hier einen als Hydraulikzylinder ausgebildeten Aktor 19 aufweist, der mit einem nicht dargestellten Speicher verbunden ist. Das Lastverlagerungselement 18 ist in einem Schwader-Ansatzpunkt $A_S$ gelenkig mit dem Schwader-Rahmen 11 verbunden und in einem Pressen-Ansatzpunkt $A_P$ gelenkig mit dem Deichselabschnitt 22 des Pressen-Rahmens 21 verbunden. Es ist dazu ausgebildet, entsprechend dem Hydraulikdruck, mit welchem es beaufschlagt wird, eine Verlagerungs-Kraft $F_L$ entlang einer durch beide Ansatzpunkte $A_P$, $A_S$ verlaufenden Wirkungsachse W zu erzeugen. Beide Ansatzpunkte $A_P$, $A_S$ sind bezüglich der Hochachse Z oberhalb des hinteren Ankopplungspunkts B angeordnet, dementsprechend verläuft auch die Wirkungsachse W oberhalb des hinteren Ankopplungspunkts B. Das Lastverlagerungselement 18 kann Teil des Schwaders 10 oder Teil der Ballenpresse 20 sein. Es kann über nicht dargestellte Hydraulikleitungen versorgt werden, die über eine ebenfalls nicht dargestellte Hydraulikpumpe des Schleppers 30 beaufschlagt werden. Die momentane Beaufschlagung des Lastverlagerungselements 18 kann durch Hydraulikventile verändert werden, die von einer Steuereinheit 50 ansteuerbar sind. Die Steuereinheit 50 kann im Schlepper 30, im Schwader 10 oder in der Ballenpresse 20 angeordnet sein.

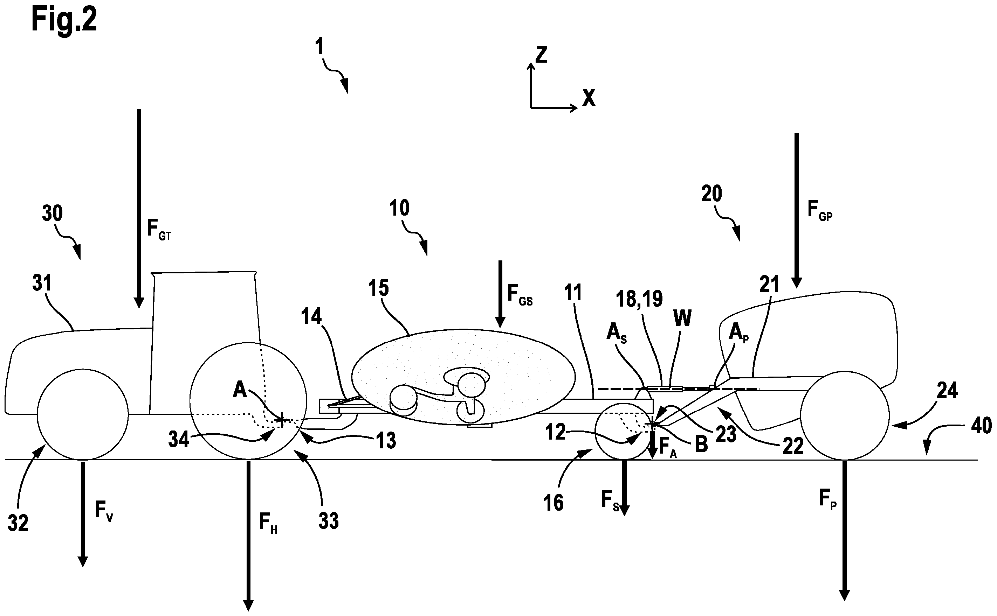

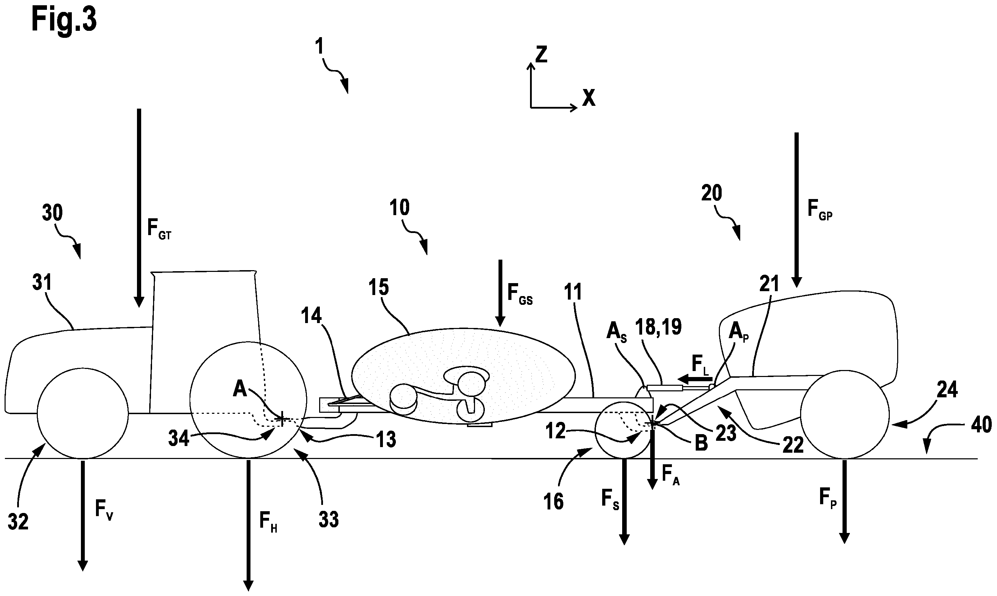

Fig.2 zeigt einen Zustand, in welchem das Lastverlagerungselement 18 inaktiv ist. In diesem Zustand wirken auf die Vorderachse 32 sowie die Hinterachse 33 eine Vorderachslast $F_V$ sowie eine Hinterachslast $F_H$, die zu einem Großteil aus einer Gewichtskraft $F_{GT}$ des Schleppers 30 resultieren. Allerdings ist der Schwader 10 über die vordere Kopplungsvorrichtung 13 sowie die Schlepper-Kopplungsvorrichtung 34 teilweise am Schlepper 30 abgestützt, wodurch sich insbesondere die Hinterachslast $F_H$ erhöht, während sich die Vorderachslast $F_V$ verringert, jeweils im Vergleich zu einem Zustand ohne angehängten Schwader 10. Auf den Schwader 10 wirkt seine Gewichtskraft $F_{GS}$, die teilweise über das Schwader-Fahrwerk 16 abgestützt ist und somit zu einer Schwader-Achslast Fs beiträgt. Teilweise ist diese Gewichtskraft $F_{GS}$ allerdings auch am Schlepper 30 abgestützt. Des Weiteren ist eine Gewichtskraft $F_{GP}$ der Ballenpresse 20 anteilig über die Pressen-Kopplungsvorrichtung 24 und die hintere Kopplungsvorrichtung 12 am Schwader 10 abgestützt, entsprechend einer in Fig.2 ebenfalls eingezeichneten Abstützkraft $F_A$. Ein anderer Teil der Gewichtskraft $F_{GP}$ der Ballenpresse 20 ist über das Pressen-Fahrwerk 24 abgestützt und führt somit zu einer Pressen-Achslast $F_P$. Diese ist in Fig.2 wesentlich größer als die Schwader-Achslast Fs. Daher ist der Eingriff des Schwader-Fahrwerks 16 mit dem Boden 40 weniger sicher als derjenige des Pressen-Fahrwerks 24. In Fig.2 und 3 sind bezüglich der Achslasten $F_H$, $F_P$, $F_S$, $F_V$ jeweils die nach unten auf den Boden wirkenden Kräfte eingezeichnet. Diese sind selbstverständlich jeweils Teil eines Kräftepaars, wobei eine nicht eingezeichnete entgegengesetzte Kraft auf die Räder der jeweiligen Achse wirkt.

Fig.3 zeigt einen Zustand, in welchem das Lastverlagerungselement 18 aktiv ist. Es erzeugt die oben genannte Verlagerungs-Kraft $F_L$, die zwischen den Ansatzpunkten $A_P$, As wirkt. Dabei handelt es sich um eine Zugkraft, die also darauf gerichtet ist, die Ansatzpunkte $A_P$, As zueinander zu ziehen. Streng genommen handelt es sich um ein Kräftepaar, wobei in Fig. 3 die am Pressen-Ansatzpunkt $A_P$ angreifende Kraft eingezeichnet ist. Die Verlagerungs-Kraft $F_L$ erzeugt ein Lastverlagerungs-Drehmoment bezüglich des hinteren Ankopplungspunkts B. Das Lastverlagerungs-Drehmoment wirkt anhebend auf die Ballenpresse 20, reduziert also die Pressen-Achslast $F_P$, wie durch den Vergleich mit Fig.2 erkennbar ist. Gleichzeitig erhöht sich die Abstützkraft $F_A$ in gleichem Maße. Dies wiederum führt zu einer Erhöhung der Schwader-Achslast Fs. Diese vergrößert sich auch dadurch, dass die erhöhte Abstützkraft $F_A$ ein Drehmoment bezüglich der Achse des Schwader-Fahrwerks 16 erzeugt, durch welches die Abstützung am Schlepper 30 reduziert wird. Entsprechend verringert sich auch die Hinterachslast $F_H$, während die Vorderachslast $F_V$ geringfügig zunehmen kann. Aufgrund der Erhöhung der Schwader-Achslast Fs ist der Eingriff des Schwader-Fahrwerks 16 mit dem Boden deutlich verbessert. Der Eingriff des Pressen-Fahrwerks 24 mit dem Boden ist immer noch ausreichend gut.

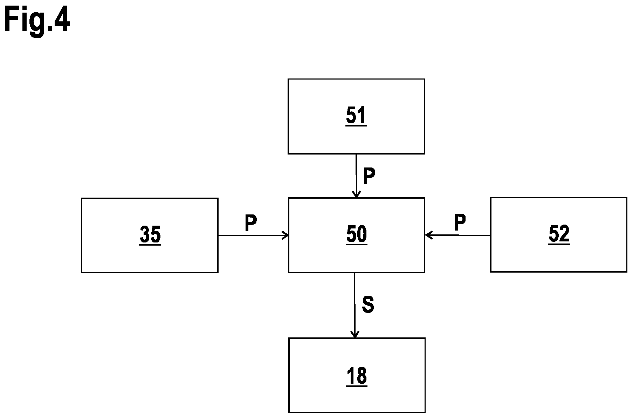

Fig.4 zeigt ein Blockdiagramm, das beispielhaft Komponenten zeigt, mit denen sich ein erfindungsgemäßes Verfahren zum Betreiben des Gespanns 1 realisieren lässt. Die Steuereinheit 50 steuert das Lastverlagerungselement 18 automatisch in Abhängigkeit von einem oder mehreren Parametern P an, indem sie Steuersignale S sendet. Dabei können zum einen Parameter P über eine Benutzerschnittstelle 35 eingegeben werden, die beispielsweise in den Schlepper 30 integriert sein kann. Ein derartiger Parameter P könnte zum Beispiel eine vom Benutzer gewünschte Schwader-Achslast Fs sein. Zum anderen können aber auch Parameter P mittels wenigstens einer Sensoreinheit 51 automatisch erfasst werden. Ein derartiger Parameter P könnte zum Beispiel eine Fahrgeschwindigkeit sein, eine Fahrtrichtung, eine Bodenneigung, eine Bodenbeschaffenheit, eine Seitendrift des Schwaders, eine Achslast und/oder die Abstützkraft $F_A$. Die Bodenneigung kann über Orientierungssensoren aus der aktuellen dreidimensionalen Orientierung des Schwaders 10 oder eines anderen Fahrzeugs relativ zur Vertikalen, also zur Richtung der Schwerkraft, ermittelt werden. Die Achslasten $F_S$, $F_P$ oder die Abstützkraft $F_A$ können zum Beispiel über Kraft- oder Drucksensoren ermittelt werden. Die Seitendrift kann beispielsweise mittels Trägheitssensoren ermittelt werden. Alternativ oder zusätzlich kann die Steuereinheit 50 zur Erfassung eines Parameters P auf eine Datenquelle 52 zugreifen, mit welcher sie zum Beispiel über ein Netzwerk verbunden sein kann. Die Datenquelle 52 kann dabei in eines der Fahrzeuge 10, 20, 30 des Gespanns integriert sein, oder es kann sich um eine externe Datenquelle 52 handeln. Die Datenquelle 52 kann beispielsweise Daten bezüglich Bodenneigung und/oder Bodenbeschaffenheit enthalten, die die Steuereinheit 50 mit Daten bezüglich der Position und/oder der Fahrtrichtung des Gespanns verknüpfen kann, um zu ermitteln, welche Parameter an der aktuellen Position oder entlang einer Fahrroute zu erwarten sind. Es können auch Wetterdaten abgerufen werden, die zum Beispiel Rückschlüsse auf die Eigenschaften des Bodens erlauben können.

**Patentansprüche**

1. Gespann (1) mit einem Schwader (10) und einer Ballenpresse (20) als Bearbeitungsgeräten, wobei die Ballenpresse (20) einen Pressen-Rahmen (21) aufweist, ein wenigstens indirekt hiermit verbundenes Pressen-Fahrwerk (24) sowie eine Pressen-Kopplungsvorrichtung (23), und wobei der Schwader (10) einen Schwader-Rahmen (11) aufweist, ein wenigstens indirekt hiermit verbundenes Schwader-Fahrwerk (16) sowie eine bezüglich einer Längsachse (X) hinterseitig am Schwader-Rahmen (11) angeordnete hintere Kopplungsvorrichtung (12) mit einem hinteren Ankopplungspunkt (B), an welchem die Pressen-Kopplungsvorrichtung (23) gelenkig sowie zug- und druckkraftübertragend ankoppelbar ist, wodurch die Ballenpresse (20) anteilig am Schwader-Rahmen (11) abstützbar ist, **dadurch gekennzeichnet, dass** ein Lastverlagerungselement (18) dazu eingerichtet ist, ein zwischen dem Schwader-Rahmen (11) und der Ballenpresse (20) wirkendes Verlagerungs-Drehmoment bezüglich des hinteren Ankopplungspunkts (B) auszuüben, durch welches eine Pressen-Achslast ($F_P$) der Ballenpresse (20) unter Erhöhung einer Schwader-Achslast (Fs) des Schwaders (10) reduzierbar ist.

2. Gespann nach Anspruch 1, **dadurch gekennzeichnet, dass** das Lastverlagerungselement (18) dazu eingerichtet ist, eine Verlagerungs-Kraft ($F_L$) zwischen einem Schwader-Ansatzpunkt (As) und einem Pressen-Ansatzpunkt ($A_P$) entlang einer durch die Ansatzpunkte ($A_P$, As) verlaufenden Wirkungsachse (W) zu erzeugen, wobei die Wirkungsachse (W) gegenüber dem hinteren Ankopplungspunkt (B) versetzt ist.

3. Gespann nach einem der vorangehenden Ansprüche, **dadurch gekennzeichnet, dass** der Schwader-Ansatzpunkt (As) bezüglich des Schwader-Rahmens (11) stationär angeordnet ist und/oder der Pressen-Ansatzpunkt ($A_P$) bezüglich des Pressen-Rahmens (21) stationär angeordnet ist.

4. Gespann nach einem der vorangehenden Ansprüche, **dadurch gekennzeichnet, dass** das Lastverlagerungselement (18) gelenkig mit beiden Ansatzpunkten ($A_P$, As) verbunden ist.

5. Gespann nach einem der vorangehenden Ansprüche, das Lastverlagerungselement (18) einen Aktor (19) aufweist, der bevorzugt als Linearaktor ausgebildet ist.

6. Gespann nach einem der vorangehenden Ansprüche, das Lastverlagerungselement (18) elastisch auslenkbar ist.

7. Gespann nach einem der vorangehenden Ansprüche, **dadurch gekennzeichnet, dass** wenigstens einer der Ansatzpunkte ($A_P$, $A_S$) bezüglich einer Hochachse (Z) höher angeordnet ist als der hintere Ankopplungspunkt (B).

8. Gespann nach einem der vorangehenden Ansprüche, **dadurch gekennzeichnet, dass** einer der Ansatzpunkte ($A_P$, As), bevorzugt der Schwader-Ansatzpunkt (As), gegenüber dem hinteren Ankopplungspunkt (B) quer zur Hochachse (Z) um höchstens 50 cm, bevorzugt höchstens 20 cm, weiter bevorzugt höchstens 10 cm, versetzt ist.

9. Gespann nach einem der vorangehenden Ansprüche, **dadurch gekennzeichnet, dass** die Wirkungsachse (W) bezüglich der Hochachse (Z) oberseitig des hinteren Ankopplungspunkts (B) verläuft und das Lastverlagerungselement (18) dazu eingerichtet ist, zur Verringerung der Pressen-Achslast ($F_P$) eine Zugkraft auszuüben.

10. Gespann nach einem der vorangehenden Ansprüche, **dadurch gekennzeichnet, dass** das Lastverlagerungselement (18) zur Anpassung des Verlagerungs-Drehmoments ansteuerbar ist.

11. Gespann nach einem der vorangehenden Ansprüche, **dadurch gekennzeichnet, dass** dieses eine Steuereinheit (50) aufweist, die dazu eingerichtet ist, das Lastverlagerungselement (18) anzusteuern, um das Verlagerungs-Drehmoment in Abhängigkeit von wenigstens einem Parameter (P) automatisch anzupassen.

12. Gespann nach einem der vorangehenden Ansprüche, **dadurch gekennzeichnet, dass** wenigstens ein Parameter (P) ausgewählt ist aus einer Fahrgeschwindigkeit, einer Fahrtrichtung, einer Bodenneigung, einer Bodenbeschaffenheit, einer Seitendrift des Schwaders (10), einer Achslast sowie einer Abstützkraft ($F_A$) der Ballenpresse (20).

13. Gespann nach einem der vorangehenden Ansprüche, **dadurch gekennzeichnet, dass** die Steuereinheit (50) dazu eingerichtet ist, wenigstens einen Parameter (P) automatisch zu erfassen.

14. Bearbeitungsgerät (10, 20) für ein Gespann (1) nach einem der vorangehenden Ansprüche, **dadurch gekennzeichnet, dass** dieses das Lastverlagerungselement (18) aufweist.

15. Verfahren zum Betreiben eines Gespanns (1) mit einem Schwader (10) und einer Ballenpresse (20) als Bearbeitungsgeräten, wobei die Ballenpresse (20) einen Pressen-Rahmen (21) aufweist, ein wenigstens indirekt hiermit verbundenes Pressen-Fahrwerk (24) sowie eine Pressen-Kopplungsvorrichtung (23), und wobei der Schwader einen Schwader-Rahmen (11) aufweist, ein wenigstens indirekt hiermit verbundenes Schwader-Fahrwerk (16) sowie eine bezüglich einer Längsachse (X) hinterseitig am Schwader-Rahmen (11) angeordnete hintere Kopplungsvorrichtung (12) mit einem hinteren Ankopplungspunkt (B), an welchem die Pressen-Kopplungsvorrichtung (23) gelenkig sowie zug- und druckkraftübertragend ankoppelbar ist, wodurch die Ballenpresse (20) anteilig am Schwader-Rahmen (11) abstützbar ist,

**dadurch gekennzeichnet, dass**

ein Lastverlagerungselement (18) ein zwischen dem Schwader-Rahmen (11) und der Ballenpresse (20) wirkendes Verlagerungs-Drehmoment bezüglich des hinteren Ankopplungspunkts (B) ausübt, durch welches eine Pressen-Achslast ($F_P$) der Ballenpresse (20) unter Erhöhung einer Schwader-Achslast ($F_s$) des Schwaders (10) reduziert wird.

**Fig.1**

Fig.2

Fig.3

Fig.4

Europäisches
Patentamt

European
Patent Office

Office européen
des brevets

**EUROPÄISCHER RECHERCHENBERICHT**

**Nummer der Anmeldung**

EP 25 16 8449

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2015/059308 A1 (ROUX JEAN-MICHEL [FR]) 5. März 2015 (2015-03-05) * das ganze Dokument * ----- | 1-15 | INV. A01F15/08 |
| X | EP 3 643 152 A1 (AGCO INT GMBH [CH]) 29. April 2020 (2020-04-29) | 1-12,14, 15 | |
| A | * das ganze Dokument * ----- | 13 | |
| A | US 2018/125010 A1 (GRESCH VALENTIN [DE] ET AL) 10. Mai 2018 (2018-05-10) * das ganze Dokument * ----- | 1-15 | |
| A | EP 3 689 119 B1 (DEERE & CO [US]) 26. Oktober 2022 (2022-10-26) * das ganze Dokument * ----- | 1-15 | |
| A | EP 4 108 067 A1 (CNH IND BELGIUM NV [BE]) 28. Dezember 2022 (2022-12-28) * das ganze Dokument * ----- | 1-15 | |
| A | US 2019/090429 A1 (GRESCH VALENTIN [DE]) 28. März 2019 (2019-03-28) * das ganze Dokument * ----- | 1-15 | RECHERCHIERTE SACHGEBIETE (IPC) A01F |

Der vorliegende Recherchenbericht wurde für alle Patentansprüche erstellt

| Recherchenort | Abschlußdatum der Recherche | Prüfer |
|---|---|---|
| München | 22. August 2025 | Giorgini, Gabriele |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**  EP 25 16 8449

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2025

| Im Recherchenbericht angeführtes Patentdokument | Datum der Veröffentlichung | Mitglied(er) der Patentfamilie | Datum der Veröffentlichung |
|---|---|---|---|
| US 2015059308 A1 | 05-03-2015 | EP 2856856 A1 | 08-04-2015 |
| | | FR 3009921 A1 | 06-03-2015 |
| | | US 2015059308 A1 | 05-03-2015 |
| EP 3643152 A1 | 29-04-2020 | EP 2734027 A1 | 28-05-2014 |
| | | EP 3643152 A1 | 29-04-2020 |
| | | US 2014343802 A1 | 20-11-2014 |
| | | WO 2013013917 A1 | 31-01-2013 |
| US 2018125010 A1 | 10-05-2018 | DE 102016222081 A1 | 17-05-2018 |
| | | EP 3320769 A1 | 16-05-2018 |
| | | EP 3563665 A1 | 06-11-2019 |
| | | US 2018125010 A1 | 10-05-2018 |
| | | US 2020396902 A1 | 24-12-2020 |
| EP 3689119 B1 | 26-10-2022 | DE 102019201333 A1 | 06-08-2020 |
| | | EP 3689119 A1 | 05-08-2020 |
| | | US 2020245524 A1 | 06-08-2020 |
| EP 4108067 A1 | 28-12-2022 | EP 4108067 A1 | 28-12-2022 |
| | | US 2022408653 A1 | 29-12-2022 |
| US 2019090429 A1 | 28-03-2019 | CN 109548498 A | 02-04-2019 |
| | | DE 102017217221 A1 | 28-03-2019 |
| | | EP 3469884 A1 | 17-04-2019 |
| | | US 2019090429 A1 | 28-03-2019 |

EPO FORM P0461

Für nähere Einzelheiten zu diesem Anhang : siehe Amtsblatt des Europäischen Patentamts, Nr.12/82